Europäisches Patentamt

**European Patent Office**

Office européen des brevets

(19)

(11) Numéro de publication: **0 238 431
B1**

(12) **FASCICULE DE BREVET EUROPEEN**

(45) Date de publication du fascicule du brevet:
03.05.89

(51) Int. Cl.⁴: **F16L 21/08**

(21) Numéro de dépôt: **87470006.5**

(22) Date de dépôt: **23.02.87**

�</br>

(54) **Dispositif de jonction entre tuyaux comportant un bout mâle et un emboîtement.**

(30) Priorité: **07.03.86 FR 8603254**

(43) Date de publication de la demande:
**23.09.87 Bulletin 87/39**

(45) Mention de la délivrance du brevet:
**03.05.89 Bulletin 89/18**

(84) Etats contractants désignés:
**AT CH DE ES FR GB IT LI**

(56) Documents cités:
**DE-U- 8 522 903
FR-A- 2 166 593
FR-A- 2 450 988
US-A- 3 937 500**

(73) Titulaire: **PONT-A-MOUSSON S.A., 91, Avenue de la
Libération, F-54017 Nancy(FR)**

(72) Inventeur: **Vigneron, Pierre, 7, rue Saint-Pierre
Maidières, F-54700 Pont a Mousson(FR)**
Inventeur: **Vitel, Jean-Pierre, 83, avenue de la Petite
Suisse Blénod, F-54700 Pont a Mousson(FR)**

(74) Mandataire: **Puit, Thierry et al, c/o Centre de
Recherches de Pont-à-Mousson B.P. 28,
F-54703 Pont-à-Mousson Cedex(FR)**

## Description

L'invention concerne un dispositif de jonction entre tuyaux comportant un bout mâle et un emboîtement présentant respectivement des dispositifs d'appui en regard, le dispositif d'appui de l'emboîtement étant défini par une collerette radialement en saillie intérieurement à celui-ci, et le dispositif d'appui du bout mâle étant défini par une couronne d'appui appliquée, par une face interne, contre un épaulement radial dudit bout mâle, une masse incompressible, constituée par exemple d'un matériau granulaire, étant contenue dans un espace annulaire, étanche audit matériau granulaire, formé entre la surface interne de l'emboîtement et la surface externe de la couronne d'appui, celle-ci étant fendue et présentant une élasticité suffisante pour être de diamètre variable, cette couronne demeurant ouverte une fois le joint verrouillé grâce à un dispositif d'écartement maintenant l'espacement de la fente ménagée entre les deux extrémités de la couronne.

Il est en particulier connu de réaliser un dispositif d'écartement constitué par un vérin à vis à tiges filetées à pas inversés dont les extrémités distales prennent appui respectivement sur des plaques d'appui prévues aux extrémités en regard de la couronne d'appui, et dont les extrémités proximales coopèrent avec les taraudages à pas inversés correspondants d'un écrou central de réglage (p.ex. DE-U-8 522 903).

Un tel dispositif d'écartement est satisfaisant mais perfectible. En effet, la force que peut engendrer un vérin à vis est relativement limitée, et ce vérin subit en permanence l'effort d'écartement. Par suite, on n'est pas assuré que la couronne d'appui soit réellement et fermement appliquée par toute sa périphérie externe sur la surface interne de l'emboîtement.

Le but de la présente invention est donc de perfectionner ce dispositif et d'obtenir une force d'écartement notablement plus importante, sans que cela nécessite l'action permanente d'un vérin.

A cet effet, un dispositif de jonction du type défini au début sera, conformément à l'invention, essentiellement caractérisé en ce que ledit dispositif d'écartement comporte deux étriers disposés dans ladite fente de la couronne d'appui, à savoir dans l'espace qui sépare ses deux extrémités, ces étriers présentant chacun une butée pour l'extrémité correspondante de la couronne, et en ce que chaque étrier est assujetti à l'emboîtement par un moyen de blocage.

Grâce à cette disposition générale de l'invention, on pourra serrer beaucoup plus fortement qu'auparavant la périphérie externe de la couronne d'appui contre la surface interne de l'emboîtement, car on pourra utiliser un vérin hydraulique, disposé entre les faces en regard des deux étriers, pour écarter ceux-ci au maximum l'un de l'autre et ainsi dilater au maximum la couronne d'appui. Lorsque cette opération sera réalisée, on mettra en place les moyens de blocage précités, bloquant chaque étrier sur l'emboîtement, ensuite de quoi on pourra retirer le vérin hydraulique.

On atteint donc bien le but fixé, puisque l'on peut ainsi obtenir une plus grande force d'écartement qu'avec un vérin à vis, et que le vérin hydraulique utilisé n'a plus besoin d'être maintenu en place en permanence; il n'est utilisé que d'une façon transitoire, lors du montage du joint.

Les moyens de blocage peuvent être de tout type approprié, et être constitués par exemple, pour chaque étrier, par une clavette, propre à être engagée dans une ouverture de l'étrier, et à être coincée entre la paroi supérieure de celle-ci et la surface périphérique extérieure de l'emboîtement.

Ces clavettes pourront être bloquées très facilement, à l'aide d'une masse.

Pour éviter d'être écarté axialement de l'emboîtement lors de l'opération de coinçage de la clavette, chaque étrier est constitué essentiellement d'un corps s'étendant perpendiculairement à une base destinée à venir sensiblement au niveau de la couronne d'appui, ce corps étant traversé par l'ouverture destinée à la clavette, une gorge étant ménagée entre ce corps et un rebord de ladite base, pour la réception de la collerette de l'emboîtement.

On comprend que c'est grâce à ce rebord que chaque étrier sera axialement maintenu en place lors du coinçage de la clavette, puisque ce rebord viendra alors en butée contre la collerette de l'emboîtement, plus précisément contre sa paroi radiale arrière.

En outre, pour faire en sorte que les clavettes soient correctement guidées lors de l'opération de coinçage, on prévoit que chaque étrier comporte, parallèlement à ladite base, un surplomb présentant une cannelure de guidage de la clavette, le fond de cette cannelure, de préférence incliné, venant dans le prolongement de ladite paroi supérieure de l'ouverture.

L'invention présente, outre les avantages évoqués plus haut, l'avantage supplémentaire de permettre une mise en place commode de la masse de billes, grenaille métallique ou analogue, intercalée entre la face cylindrique interne de l'emboîtement et la surface cylindrique externe de la couronne d'appui; pour ce faire, on pourra utiliser avantageusement un passage traversant le corps de chacun des étriers.

A cet effet, un dispositif conforme à la présente invention pourra donc encore être caractérisé en ce que, du côté des faces des étriers qui sont destinées à venir en regard l'une de l'autre, la largeur de ladite gorge est telle qu'elle est entièrement obturée par la collerette de l'emboîtement, tandis que du côté des faces opposées, la largeur de sortie de la gorge est supérieure à la section transversale de ladite collerette, de sorte qu'une communication soit établie entre une cuvette ménagée au fond de l'étrier considéré, au-dessous de ladite collerette, et l'espace annulaire prévu pour ladite masse incompressible, cette cuvette pouvant être alimentée en matériau granulaire par un passage traversant le corps dudit étrier.

Cette disposition, ainsi que celles qui ont été évoquées ci-dessus, sera d'ailleurs mieux comprise à la lecture de la description donnée ci-dessous d'un exemple de mise en œuvre de l'invention, donné à titre uniquement illustratif, et ceci avec référence aux figures du dessin annexé dans lequel:

- la figure 1 est une vue en demi-coupe axiale d'un dispositif de jonction conforme à l'invention, par le plan axial de l'étrier de gauche de la figure 8;
- la figure 1a est une vue suivant la flèche F de la figure 1;
- la figure 2 est une vue en coupe analogue à celle de la figure 1, mais partielle, par le plan II–II de la figure 4;
- la figure 3 est une vue en coupe axiale partielle par le plan III–III de la figure 8;
- la figure 4 est une vue en coupe horizontale d'un étrier, par la ligne IV–IV de la figure 2;
- la figure 5 est une vue en coupe transversale d'un étrier, par la ligne V–V de la figure 2;
- la figure 6 est une vue en élévation de l'arrière d'un étrier, avec coupe partielle;
- la figure 7 est une vue en perspective de trois-quarts arrière d'un étrier; et
- la figure 8 est une vue partielle en perspective d'un dispositif de jonction conforme à l'invention, après sa mise en place.

Sur les figures on a référencé en 1 un emboîtement, d'un premier tuyau, et en 2 un bout mâle, d'un deuxième tuyau, qu'un dispositif de jonction conforme à l'invention a pour but de relier de façon étanche mais avec un certain degré de liberté (l'un des tuyaux peut être angulairement dévié par rapport à l'autre).

A cet effet, une garniture d'étanchéité 3 à talon d'ancrage 4 est radialement comprimée entre le bout mâle 2 et l'emboîtement 1, en étant axialement en appui contre une nervure radiale 5 de ce dernier.

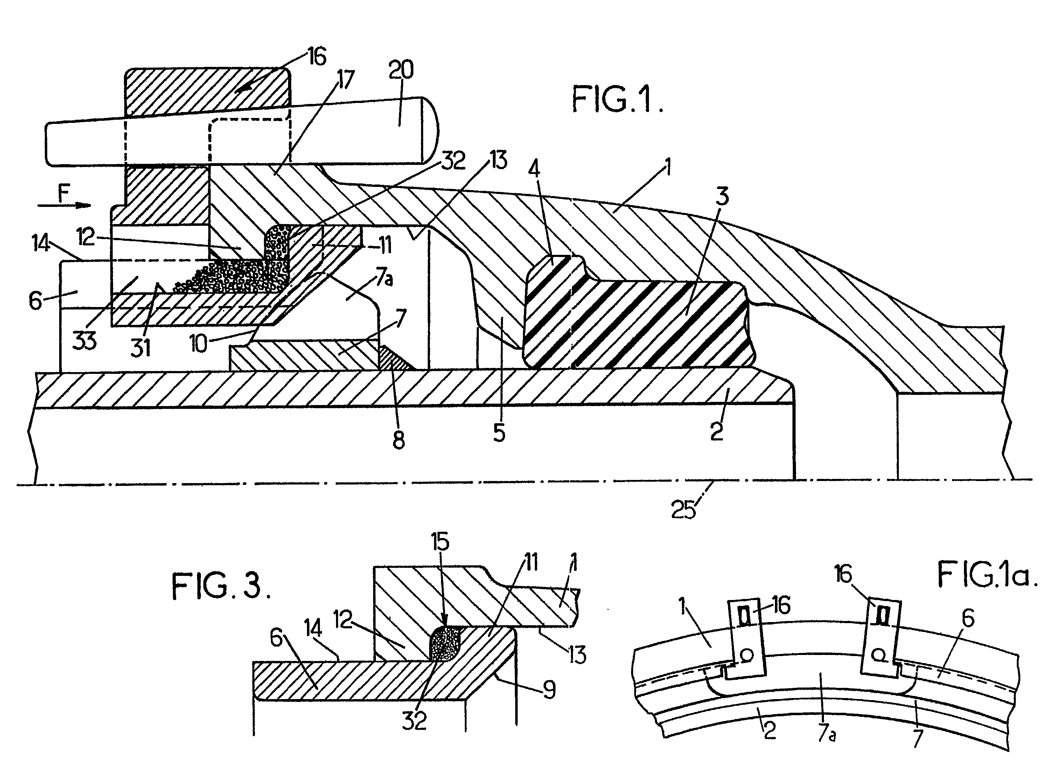

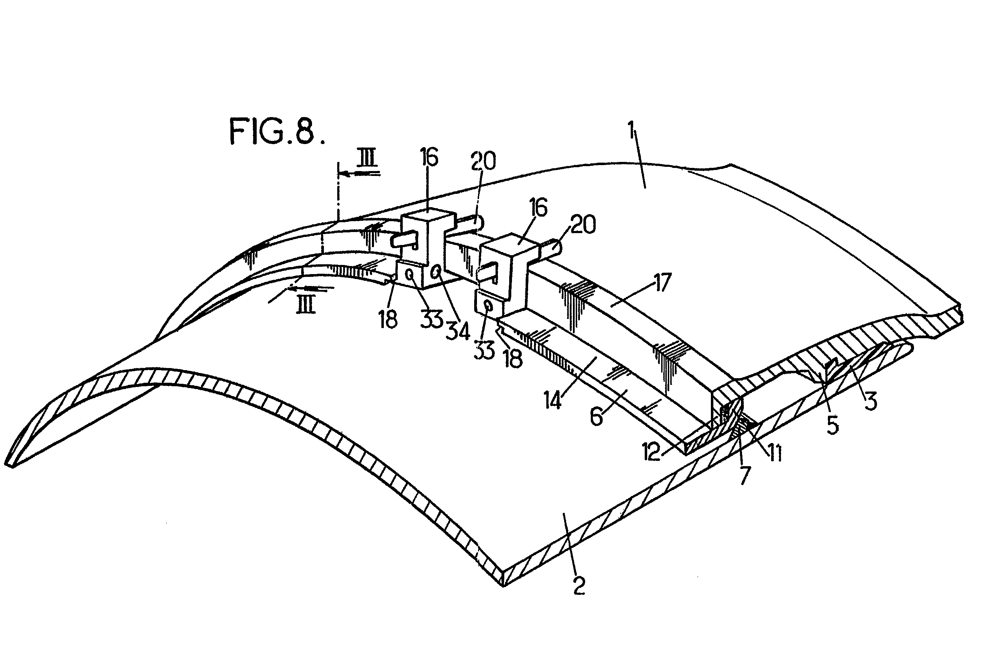

L'appui axial de l'emboîtement 1 sur le bout mâle 2 est assuré par la coopération d'une couronne d'appui 6 solidaire de l'emboîtement et d'un épaulement radial 7 solidaire du bout mâle par un cordon de soudure annulaire 8, couronne et épaulement étant en appui l'une sur l'autre par l'intermédiaire de leurs surfaces tronconiques respectives 9 et 10. Pour permettre le passage de la bride 11 de la couronne 6 derrière une collerette radiale 12 que comporte l'emboîtement 1, la couronne 6 est fendue, comme bien visible sur la figure 8, et est réalisée en un matériau élastique, par exemple de l'acier ou de la fonte ductile. Ainsi la couronne 6 est-elle suffisamment déformable pour que son diamètre soit réduit jusqu'à une dimension permettant le passage de la bride 11 à l'intérieur de la collerette 12, le relâchement de la couronne permettant alors sa dilatation, suffisamment pour que la bride 11 vienne s'appuyer, par toute sa périphérie, contre la surface interne 13 de l'emboîtement (voir figure 1).

Il est à noter qu'alors la collerette 12 vient s'appuyer contre la surface périphérique extérieure 14 de la couronne d'appui 6 (figure 3).

On conçoit qu'un espace annulaire 15 puisse alors être ménagé entre la bride 11 et la collerette 12 et entre les surfaces 13 et 14.

Le dispositif de jonction ainsi constitué, et dont on vient de décrire les parties connues, comporte encore un dispositif de verrouillage ou dispositif d'écartement, propre à maintenir en toutes circonstances la couronne d'appui 6 à pleine ouverture, et à appliquer fermement sa bride 11 contre la surface interne 13 de l'emboîtement 1.

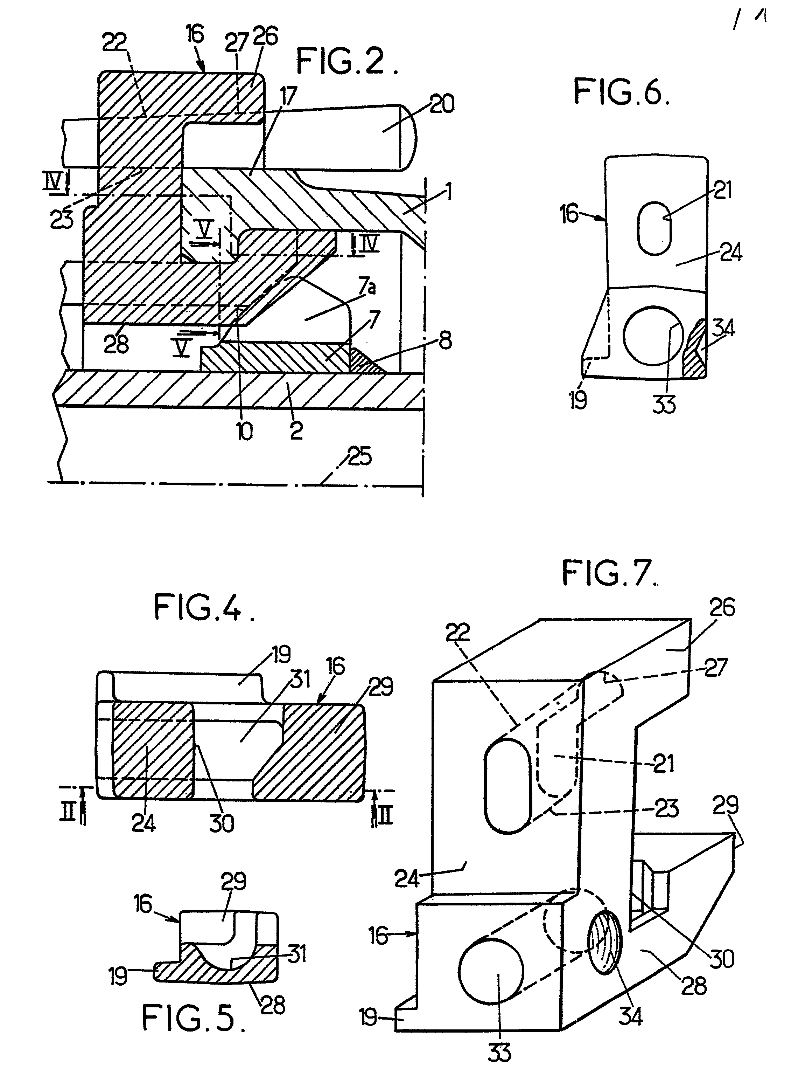

Ce dispositif de verrouillage de la jonction et donc de maintien de l'expansion maximale de la couronne d'appui 6, comporte essentiellement deux étriers 16, bloqués sur le rebord périphérique externe 17 de l'emboîtement 1, et qui servent de butées aux bords de la fente de la couronne d'appui 6, à savoir à ses extrémités en forme d'encoches 18, lesquelles s'emboîtent sur des butées ou talons de formes complémentaires 19 des étriers (voir figures 4 à 7). Ceux-ci sont disposés symétriquement l'un de l'autre par rapport au plan axial médian qui les sépare, comme bien visible sur la figure 8.

Le blocage de chaque étrier 16 sur le rebord 17 de l'emboîtement est réalisé grâce à une clavette 20 engagée dans une ouverture 21 de l'étrier, dont la forme est bien visible sur la figure 7, cette clavette étant coincée entre la paroi supérieure 22 de l'ouverture 21 et la surface périphérique extérieure du rebord 17, laquelle affleure pratiquement la paroi inférieure 23 de l'ouverture. Pour l'obtention d'une assise suffisante pour la clavette 20, chaque étrier 16 comporte, à la perpendiculaire de sa partie centrale ou corps 24, lui-même perpendiculaire à l'axe 25 de la jonction, un surplomb 26 dans lequel est ménagée une cannelure 27 de guidage de la clavette, le fond incliné de cette cannelure se situant dans le prolongement de la paroi supérieure 22 de l'ouverture 21.

Quant à la base 28 de l'étrier, elle se termine par un rebord radial 29 ménageant entre lui et le corps 24 une gorge 30 pour la réception de la collerette 12 de l'emboîtement 1.

Comme cela est bien visible sur différentes figures et en particulier sur la figure 4, du côté des faces des étriers qui sont destinées à venir en regard l'une de l'autre, la largeur de la gorge 30 est telle qu'elle est entièrement obturée par la collerette 12 de l'emboîtement (figure 2), tandis que du côté des faces opposées, destinées à venir en contact avec les encoches 18 de la couronne d'appui 6, la largeur de sortie de la gorge 30 est supérieure à la section transversale de la collerette 12 (figure 1). De la sorte, une communication est établie entre une cuvette 31 (figures 4 et 5) ménagée au fond de chaque étrier, au-dessous de la collerette 12 lorsque l'étrier est en place, et l'espace annulaire 15 mentionné plus haut. Par suite, il est très facile de remplir cet espace 15 de billes d'acier ou autre matériau granulaire 32, en utilisant un passage 33 traversant la partie inférieure du corps 24 de l'étrier et débouchant au niveau du fond de la cuvette 31.

On voit qu'un dispositif de jonction conforme à l'invention peut être mis en place très simplement: en frettant la couronne d'appui fendue 6, on peut réduire suffisamment son diamètre pour que sa bride 11 passe derrière la collerette 12 de l'emboîtement 1. On relâche alors la couronne 6, qui se dilate au maximum, la surface périphérique extérieure de la bride 11 venant au contact de la surface interne 13 de l'emboîtement, l'espace annulaire 15 précité étant ménagé entre les deux, et la surface tronconique 9 étant amenée au contact de la surface tronconique 10 de l'épaulement radial 7. On met alors en place les deux étriers 16, en emboîtant leur talon 19 dans l'extrémité correspondante 18 de la couronne 6, et en faisant passer leur rebord radial 29 derrière la collerette 12 de l'emboîtement.

Il est à noter que les étriers une fois positionnés ne peuvent entrer en contact avec l'épaulement radial 7, qui comporte à cet effet, sur la partie correspondante de sa longueur, un dégagement 7a (voir figures 1, 1a et 2).

Lorsque les étriers 16 ont été ainsi mis en place, on introduit un vérin hydraulique entre eux, les tiges de vérin venant prendre appui au fond d'alvéoles 34 ménagés sur les faces en regard des étriers. On peut écarter ainsi les deux étriers 16 au maximum et appliquer avec une pression considérable la surface périphérique externe de la bride 11 de la couronne 6 contre la surface interne 13 de l'emboîtement 1. A l'aide des clavettes 20, on peut ensuite bloquer les deux étriers 16 sur le rebord périphérique externe 17 de l'emboîtement. On peut alors relâcher la pression dans le vérin hydraulique et l'enlever. Enfin, on remplit l'espace annulaire 15 de billes ou analogues, en utilisant les passages 33 des étriers. Lorsque cet espace est plein, il n'est pas nécessaire de boucher ces passages 33, puisque les billes restent en place du fait de la pesanteur, les étriers étant bien entendu positionnés au point le plus haut de la jonction.

Pour démonter le dispositif et le réparer ou l'inspecter, les opérations sont de même très simples, puisqu'il suffit de faire sauter les clavettes 20 pour extraire les étriers 16, puis de fretter la couronne 6 pour la comprimer et la faire repasser sous la collerette 12 et ainsi la retirer, les billes s'échappant alors librement de l'espace 15.

**Revendications**

1. Dispositif de jonction entre tuyaux comportant un bout mâle (2) et un emboîtement (1) présentant respectivement des dispositifs d'appui (12, 6) en regard, le dispositif d'appui de l'emboîtement (1) étant défini par une collerette (12) radialement en saillie intérieurement à celui-ci, et le dispositif d'appui du bout mâle (2) étant défini par une couronne d'appui (6) appliquée, par une face interne (9), contre un épaulement radial (7) dudit bout mâle (2), une masse incompressible (32), constituée par un matériau granulaire, étant contenue dans un espace annulaire (15), étanche audit matériau granulaire, formé entre la surface interne (13) de l'emboîtement (1) et la surface externe (14) de la couronne d'appui (6), celle-ci étant fendue et présentant une élasticité suffisante pour être de diamètre variable, cette couronne demeurant ouverte une fois le joint verrouillé grâce à un dispositif d'écartement maintenant l'espacement de la fente entre les deux extrémités de la couronne, caractérisé en ce que ledit dispositif d'écartement comporte deux étriers (16) disposés dans ladite fente de la couronne d'appui (6), à savoir dans l'espace qui sépare ses deux extrémités (18), ces étriers présentant chacun une butée (19) pour l'extrémité (18) correspondante de la couronne, et en ce que étrier (16) est assujetti à l'emboîtement (1) par un moyen de blocage (20).

2. Dispositif selon la revendication 1, caractérisé en ce que ledit moyen de blocage est constitué pour chaque étrier (16) par une clavette (20), propre à être engagée dans une ouverture (21) de l'étrier, et à être coincée entre la paroi supérieure de celle-ci et la surface périphérique extérieure (17) de l'emboîtement (1).

3. Dispositif selon la revendication 2, caractérisé en ce que pour éviter d'être écarté axialement de l'emboîtement (1) lors de l'opération de coinçage de la clavette (20), chaque étrier (16) est constitué essentiellement d'un corps (24) s'étendant perpendiculairement à une base (28) destinée à venir au niveau de la couronne d'appui (6), ce corps (24) étant traversé par l'ouverture (21) destinée à la clavette, une gorge (30) étant ménagée entre ce corps (24) et un rebord (29) de ladite base, pour la réception de la collerette (12) de l'emboîtement (1).

4. Dispositif selon la revendication 3, caractérisé en ce que chaque étrier (16) comporte en outre, parallèlement à ladite base, un surplomb (26) présentant une cannelure (27) de guidage de la clavette (20), le fond de cette cannelure, de préférence incliné, venant dans le prolongement de ladite paroi supérieure (22) de l'ouverture (21).

5. Dispositif selon la revendication 3 ou 4, caractérisé en ce que, du côté des faces étriers (16) qui sont destinées à venir en regard l'une de l'autre, la largeur de ladite gorge (30) est telle qu'elle est entièrement obturée par la collerette (12) de l'emboîtement (1), tandis que du côté des faces opposées la largeur de sortie de la gorge (30) est supérieure à la section transversale de ladite collerette (12), de sorte qu'une communication soit établie entre une cuvette (31) ménagée au fond de l'étrier (16) considéré, au-dessous de ladite collerette (12), et l'espace annulaire (15) prévu pour ladite masse incompressible (23), cette cuvette (31) pouvant être alimentée en matériau granulaire (32) par un passage (33) traversant le corps (24) dudit étrier (16).

**Patentansprüche**

1. Verbindungsvorrichtung zwischen Rohren mit einem männlichen Ende (2) und einem Gehäuse (1), welche Anschlagvorrichtungen (12 bzw. 6) ausweisen, die einander gegenüberliegen, wobei die Anschlagvorrichtung des Gehäuses (1) durch einen Flansch bzw. Kragen (12) definiert ist, der im Inneren dieser radial vorspringt, und die Anschlagvorrichtung des männlichen Endes (2) durch einen Anschlagkranz (6) definiert ist, der über eine Innenseite (9) gegen eine radiale Schulter (7) des männlichen Endes (2) drückt, mit einer inkompressiblen Masse (32), die aus einem Granulatmaterial gebildet ist, welches in einem ringförmigen bezüglich des Granulatmaterials dichten Raum (15) angeordnet ist, der zwischen der Innenfläche (13) des Gehäuses (1) und der Außenfläche (14) des Anschlagkranzes (6) ausgebildet ist, wobei dieser geschlitzt ist und eine Elastizität aufweist, die ausreicht, um von einem variablen Durchmesser zu sein, wobei der Kranz offen wird, wenn die Verbindung dank einer Spreizvorrichtung verriegelt wird, die den Raum des Schlitzes zwischen den beiden Enden des Kranzes beibehält, dadurch gekennzeichnet, daß die Spreizvorrichtung zwei Bügel (16) aufweist, die in dem Schlitz des Anschlagkranzes (6) angeordnet sind, das heißt in dem Raum, der seine beiden Enden (18) trennt, wobei die Bügel jeder einen Anschlag (19) für das entsprechende Ende (18) des Kranzes aufweist, und daß jeder Bügel (16) dem Gehäuse (1) durch eine Blockierungseinrichtung (20) unterworfen ist.

2. Vorrichtung nach Anspruch 1, dadurch gekennzeichnet, daß die Blockierungseinrichtung für jeden Bügel (16) durch einen Keil (20) gebildet ist, der geeignet ist, in eine Öffnung (21) des Bügels in Eingriff zu gelangen, und geeignet ist zwischen der oberen Seitenwand dieser und der äußeren Umfangsoberfläche (17) des Gehäuses (1) eingeklemmt zu werden.

3. Vorrichtung nach Anspruch 2, dadurch gekennzeichnet, daß, um eine axiale Spreizung von dem Gehäuse (1) weg während des Einklemmvorgangs des Keiles (20) zu vermeiden, jeder Bügel (16) im wesentlichen aus einem Körper (24) gebildet ist, der sich senkrecht zu einer Basis (28) erstreckt, die dazu bestimmt ist, auf die Höhe des Anschlagkranzes (6) zu kommen, wobei der Körper (24) von einer Öffnung (21) durchquert wird, die für den Keil bestimmt ist, wobei eine Vertiefung (30) zwischen dem Körper (24) und einem Rand (29) der Basis für die Aufnahme des Kragens bzw. Flansches (12) des Gehäuses (1) ausgebildet ist.

4. Vorrichtung nach Anspruch 3, dadurch gekennzeichnet, daß jeder Bügel (16) weiterhin parallel zur Basis eine Ausladung (26) aufweist, die einen Führungskanal (27) des Keiles (20) aufweist, wobei der Boden des Kanals, der vorzugsweise geneigt ist, in der Verlängerung der oberen Seitenwand (22) der Öffnung (21) verläuft.

5. Vorrichtung nach Anspruch 3 oder 4, dadurch gekennzeichnet, daß auf der Seite der Seiten der Bügel (16), die dazu bestimmt sind, einander gegenüberzuliegen, die Breite der Vertiefung (30) so groß ist, daß sie vollständig durch den Kragen (12) des Gehäuses (1) überdeckt wird, während auf der Seite der gegenüberliegenden Seiten die Ausgangsbreite der Vertiefung (30) größer ist als der Querschnitt des Kragens (12) derart, daß eine Verbindung zwischen einem Hohlraum (31), der am Boden des betreffenden Bügels (16) unterhalb des Kragens (12) ausgebildet ist und dem ringförmigen Raum (15) ausgebildet ist, der für die inkompressible Masse (23) vorgesehen ist, wobei der Hohlraum (31) mit dem Granulatmaterial (32) durch eine Durchtrittsöffnung (33) gespeist werden kann, die den Körper (24) des Bügels (16) durchquert.

**Claims**

1. Joining device between pipes comprising a male end (2) and a socket (1) respectively comprising support devices (12, 6) in facing relationship, the support device of the socket (1) being defined by a flange (12) projecting radially inside the socket and the support device of the male end being defined by a bearing ring (6) pressed by an internal face (9) against a radial shoulder (7) of the said male end (2), an incompressible mass (32), constituted by a granular material being contained in an annular space (15), impervious to the said granular material, formed between the internal surface (13) of the socket (1) and the external surface (14) of the bearing ring (6), the latter being split and having sufficient elasticity to be of variable diameter, this ring remaining open once the joint is locked by virtue of a separation device maintaining the spacing of the gap between the two ends of the ring, characterised in that the said separation device comprises two clamps (16) located in the said gap in the bearing ring (6), namely in the space which separates its two ends (18), these clamps each comprising a stop lug (19) for the corresponding end (18) of the ring and in that each clamp (16) is fastened to the socket (1) by locking means (20).

2. Device according to Claim 1, characterised in that the said locking means is constituted for each clamp (16) by a wedging key (20), able to be engaged in an opening (21) of the clamp and to be wedged between the upper wall of the latter and the outer peripheral surface (17) of the socket (1).

3. Device according to Claim 1, characterised in that in order to avoid being separated axially from the socket (1) during the operation of wedging the key (20), each clamp (16) is constituted essentially by a body (24) extending perpendicularly to a base (28) intended to be disposed at the level of the bearing ring (6), the opening (21) intended for the key passing through this body (24), a groove (30) being provided between this body (24) and an edge (29) of the said base, for receiving the flange (12) of the socket (1).

4. Device according to Claim 3, characterised in that each clamp (16) also comprises, parallel to said base, an overhang (26) comprising a channel (27) for guiding the key (20), the bottom of this channel, which is preferably inclined, constituting an extension of said upper wall (22) of the opening (21).

5. Device according to Claim 3 or 4, characterised in that on the side of the faces of the clamps (16) which are intended to be in facing relationship, the width of said groove (30) is such that it is totally blocked by the flange (12) of the socket (1), while on the side of the opposite faces, the outlet width of the groove (30) is greater than the cross-section of the said flange (12), so that a connection is established between a trough (31) provided in the bottom of the clamp (16) in question, below the said flange (12) and the annular space (15) provided for said incompressible mass (23), this trough (31) being able to be supplied with granular material (32) through a passage (33) extending through the body (24) of said clamp (16).

FIG.1.

16 17 20 32 13 4 1 3

F

14 12 11

6

33 31 10 7a 7

8 5 2

25

EP 0 238 431 B1

FIG.3.

15 11 1

6 14 12 13

32 9

FIG.1a.

16 16 16 6

1

2 7a 7

FIG.2.

FIG.6.

FIG.4.

FIG.5.

FIG.7.

FIG.8.

EP 0 238 431 B1